(19)

Europäisches Patentamt

European Patent Office

Office européen des brevets

(11) **EP 4 307 255 A1**

(12) **EUROPEAN PATENT APPLICATION**

(43) Date of publication:
**17.01.2024 Bulletin 2024/03**

(21) Application number: **23178720.1**

(22) Date of filing: **12.06.2023**

(51) International Patent Classification (IPC):
**G07B 15/06** $^{(2011.01)}$ **G06Q 30/0283** $^{(2023.01)}$

(52) Cooperative Patent Classification (CPC):
**G07B 15/06; G06Q 30/0284; G07B 15/063**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.07.2022 IT 202200014728**

(71) Applicant: **MOVYON S.p.A.**
**00159 Roma (IT)**

(72) Inventors:
• **CIVININI, Leonardo**
**00159 ROMA (IT)**
• **NADORINI, Stefano**
**00159 ROMA (IT)**
• **GALDENZI, Sergio**
**00159 ROMA (IT)**

(74) Representative: **Pietra, Giulia et al**
**Marchi & Partners S.r.l.**
**Via Vittor Pisani, 13**
**20124 Milano (IT)**

(54) **SYSTEM AND METHOD FOR PROVIDING A REFUND FOR A TOLL PAID FOR TRAVELLING A ROAD INFRASTRUCTURE SECTION BY A VEHICLE**

(57) It is disclosed a system for providing a refund for a toll paid for travelling a road infrastructure section by a vehicle. The length of the road infrastructure section is determined and a refundable delay is determined as the minimum of: (i) a travel delay calculated as the difference between an actual time taken by the vehicle to travel the road infrastructure section and a nominal time for travelling the road infrastructure section and (ii) an average delay incurred by a plurality of vehicles in transit along the road infrastructure section during a period at least partially overlapping with the time window during which the vehicle travelled the road infrastructure section. The refund is determined finally on the basis of the length of the road infrastructure section and the refundable delay, and a payment order for said determined refund is generated.

Fig. 1

## Description

### Technical field

The present invention relates in general to the field of methods and systems for controlling traffic. In particular, the present invention relates to a system for providing a refund for a toll paid for travelling a road infrastructure section by a vehicle. The present invention also relates to a method and a computer program for providing a refund for a toll paid for travelling a road infrastructure by a vehicle.

### Prior art

As is known, the toll consists of a sum which is paid to a (public or private) operator for travelling a road infrastructure, such as a road or motorway, bridge, tunnel, etc.

The toll may be fixed sum or may depend on the road infrastructure section which has actually been travelled (as in the case of motorways) or the time spent within the infrastructure (as in the case of payment areas) or the time of day at which the infrastructure section was travelled. In the case of a fixed sum, it is merely required to detect data relating to a single transit of the vehicle, for example its transit through the control gate of the toll road infrastructure. In the case where the sum depends on the section travelled, the time spent there or the time of day the section was travelled, it is instead required to detect and correlate data relating to several transits, namely the transit through the entry gate, the transit through the exit gate and also one or more possible transits through intermediate gates, if between the entry gate and exit gate there are several alternative routes for which different sums are due.

A known system for determining the toll involves the driver of each vehicle in transit through an entry gate to pick up a ticket on which the details of the entry gate and the date and time at which the entry gate was passed through are shown. When passing through the exit gate, the ticket is inserted inside a special reader, which reads the data set forth on it and thus determines the toll due, which the driver is able to pay directly at the exit gate in cash or with a credit or debit card.

Electronic toll collection systems, namely systems which are able to identify automatically the vehicles in transit through the entry and exit gates, automatically determine the sum due by the driver of each vehicle and automatically collect the sum due, are also known.

The different types of automatic toll collection systems differ depending on the technology used for identification of the vehicles. For example, the satellite toll collection systems use GNSS (Global Navigation Satellite System) technology, which provides that the vehicle is provided on-board with a satellite location device detectable by a satellite geolocation system such as GPS or Glonass. Other automatic toll collection systems instead use ANPR (Automatic Number Plate Recognition) technology which allows reading automatically the number plates of the passing vehicles by means of alphanumeric character recognition algorithms which are applied to the images of the vehicles. Finally, automatic toll collection systems are known where use is made of so-called OBU (On-Board Unit) apparatus which are situated on-board the vehicles and are suitable for communicating with corresponding road-side devices located at the entry and exit gates by means of radiofrequency technologies such as DSRC (Dedicated Short Range Communication) or RFID (Radio-Frequency IDentification).

In the case where, along a road infrastructure, events resulting in exceptional delays occur, the operator of the road infrastructure may decide to provide a partial refund (or "cashback") of the sum paid by the vehicle drivers who were affected by these delays. The operator may establish the types of events for which a refund is paid. For example, a refund may be paid for roadworks or maintenance work, while in the case of events which are not dependent on the responsibility of the operator (for example traffic jams due to heavy traffic, weather conditions or accidents) typically no refund is envisaged.

At present, when a driver requests a refund for an exceptional delay incurred when travelling a road infrastructure section, the operator checks whether along that section there was actually an event for which a refund is due (for example, roadworks). If this is the case and if the actual time for travelling the road infrastructure section is significantly greater than the nominal travel time, the operator provides a refund which is calculated according to the difference between the two times.

### Summary of the invention

The Applicant has noticed that this method of determining the refund has a number of drawbacks.

In particular, the known method of determining the refund described above does not take into account the fact that, even though there may be for example a roadworks along a certain road infrastructure section, the exceptional delay incurred by the vehicle could be mainly due to reasons other than the roadworks, which are not the responsibility of the operator. The driver of the vehicle could, for example, have stopped off for a long time in a service area or could have travelled at a particularly slow speed along the entire section out of personal choice or because of a defect with the vehicle or could have even travelled along an alternative route which was much longer. In this case, the operator would provide a refund which is calculated according to an exceptional delay, even though actually said delay was partly (if not entirely) due to events which are not the responsibility of the operator.

The object of the present invention is to provide a system for providing a refund for a toll paid for travelling a road infrastructure section by a vehicle, which solves the aforementioned problems.

In particular, the object of the present invention is to provide a system for providing a refund for a toll paid for travelling a road infrastructure section by a vehicle, which reduces the risk of refunds being paid out on the basis of exceptional delays which, actually, are at least partially (if not entirely) due to events which are not the responsibility of the operator.

In the description and in the claims "refund" is understood as meaning an at least partial refund of the toll paid, namely the reimbursement of a percentage of the toll which may be less than 100% (partial refund) or 100% (total refund).

According to embodiments of the present invention, this problem is solved by a system which comprises a user terminal and management server in communication with the user terminal. Upon reception, by the user terminal, of a request for a refund of the toll paid for travelling a road infrastructure section by a vehicle, the management server determines the length of the travelled road infrastructure section and a refundable delay as the minimum of: (i) a travel delay calculated as the difference between the actual time taken by the vehicle to travel the road infrastructure section and a nominal time for travelling the road infrastructure section and (ii) an average delay incurred by a plurality of vehicles in transit along the road infrastructure section during a period at least partially overlapping with the time window during which the vehicle travelled the road infrastructure section. Then, the management server determines the refund on the basis of the length of the road infrastructure section and the refundable delay, and generates a payment order for said determined refund.

Advantageously, the system according to the present invention allows reducing the risk of paying out refunds based on exceptional delays which, actually, are at least partly (if not entirely) due to events which are not the responsibility of the operator.

Advantageously, in fact, if the vehicle accumulates a travel delay greater than the average delay incurred by vehicles in transit along the same section of the road structure during the same period, this means most likely that the exceptional delay incurred by the vehicle is at least partly due to a reason other than the event itself (for example a stop in a service area, a vehicle breakdown or fault, etc.). According to the invention, when a travel delay is greater than the average delay, the valid parameter for calculating the refund (or the refundable delay) is the average delay, which therefore represents the maximum delay for which a refund may be requested. In other words, for the purposes of determining the refund, delays greater than the average delay are regarded as being attributable at least party to reasons other then the event and therefore are basically reduced to the average delay. Advantageously, this allows reducing the risk of paying out refunds based on exceptional delays which, actually, are at least partly (if not entirely) are due to events which are not the responsibility of the operator.

According to a first aspect, a system for providing a refund for a toll paid for travelling a road infrastructure section by a vehicle is provided, the system comprising a user terminal and a management server in communication with the user terminal, wherein:

- the user terminal is configured to send a refund request to the management server; and
- the management server is configured, upon receipt of the refund request: to determine a length of the road infrastructure section and a refundable delay as the minimum of: (i) a travel delay calculated as the difference between an actual time taken by the vehicle to travel the road infrastructure section and a nominal time for travelling the road infrastructure section and (ii) an average delay incurred by a plurality of vehicles in transit along the road infrastructure section during a period at least partially overlapping with the time window during which the vehicle travelled the road infrastructure section; and to determine the refund on the basis of the length of the road infrastructure section and the refundable delay; and to generate a payment order for the determined refund.

Preferably, the management server is configured to determine the refund in the form of a percentage of the toll, the percentage being substantially proportional to the ratio between the refundable delay and the length of the road infrastructure section.

Preferably, the average delay is determined on the basis of geolocation data provided by a plurality of geolocation units located on-board the plurality of vehicles.

Preferably, the plurality of geolocation units is comprised in mobile terminals of the drivers of the plurality of vehicles.

Preferably, the period at least partially overlapping with the time window during which the vehicle travelled the road infrastructure section has a maximum duration of 24 hours.

Preferably, the management server is configured to determine, from the refund request, transit data relating to the travel along the road infrastructure section by the vehicle.

Preferably, the management server is configured to determine the time window and the actual time taken by the vehicle to travel the road infrastructure section on the basis of the transit data.

Preferably, the transit data comprises entry transit data provided by a first detection station located at an entry gate of the road infrastructure section and exit transit data provided by a second detection station located at an exit gate of the road infrastructure section.

According to a first variant, at least two possible routes are present between the entry gate and the exit gate and the management server is configured, upon receipt of the refund request:

- to determine, for each possible route of the at least two possible routes, a length of the possible route and a possible refundable delay as the minimum of: (i) a travel delay calculated as the difference between the actual time taken by the vehicle to travel the road infrastructure section and a nominal time for travelling the possible route and (ii) an average delay incurred by a plurality of vehicles in transit along the possible route during the period at least partially overlapping with the time window during which the vehicle travelled the road infrastructure section; and to determine a possible refund for the possible route on the basis of the length of the possible route and the possible refundable delay; and
- to determine the refund by selecting it from among the possible refunds.

Preferably, the management server is configured to determine the refund as the maximum of the possible refunds.

According to a second variant, the transit data also comprises intermediate transit data provided by at least one detection station located at at least one intermediate point of the road infrastructure section.

According to this second variant, the management server is configured, upon receipt of the refund request:

- to determine, on the basis of the transit data, an actual route of the vehicle between the entry date and the exit gate;
- to determine whether during the time window, along the actual route an event was in progress for which the refund is envisaged; and
- in the affirmative, to determine a length of the actual route and the refundable delay as the minimum of: (i) the travel delay calculated as the difference between the actual time taken by the said vehicle to travel the road infrastructure section and a nominal time for travelling the actual route and (ii) an average delay incurred by a plurality of vehicles in transit along the actual route during the period at least partially overlapping with the time window during which the vehicle travelled the road infrastructure section; and to determine the refund on the basis of the length of the actual route and the refundable delay; and to generate the payment order for the determined refund.

According to a second aspect, a method for providing a refund for a toll paid for travelling a road infrastructure section by a vehicle is provided, the method comprising:

a) receiving a refund request from a user terminal; and
b) upon receipt of the refund request, determining a length of the road infrastructure section and a refundable delay as the minimum of: (i) a travel delay calculated as the difference between an actual time taken by the vehicle to travel the road infrastructure section and a nominal time for travelling the section of the roadway infrastructure and (ii) an average delay incurred by a plurality of vehicles in transit along the road infrastructure section during a period at least partially overlapping with the time window during which the vehicle travelled the road infrastructure section;
c) determining the refund on the basis of the length of the road infrastructure section and the refundable delay; and
d) generating a payment order for the determined refund.

According to a third aspect, a computer program comprising instructions which, when the program is run by a computer, induce the computer to carry out the steps of the aforementioned method, is provided.

## Brief description of the drawings

The present invention will become clearer from the following detailed description, provided by way of a non-limiting example, to be read with reference to the accompanying drawings, in which:

- Figure 1 shows in schematic form a system for providing a refund for the toll paid for travelling a road infrastructure section by a vehicle, according to an embodiment of the present invention;
- Figure 2 shows a flow chart of the method implemented by the system of Figure 1, according to an embodiment of the present invention; and

- Figures 3, 4 and 5 show situations where the method according to the embodiment of Figure 2 is applied, according to a first variant and second variant thereof, respectively.

## Detailed description of embodiments of the invention

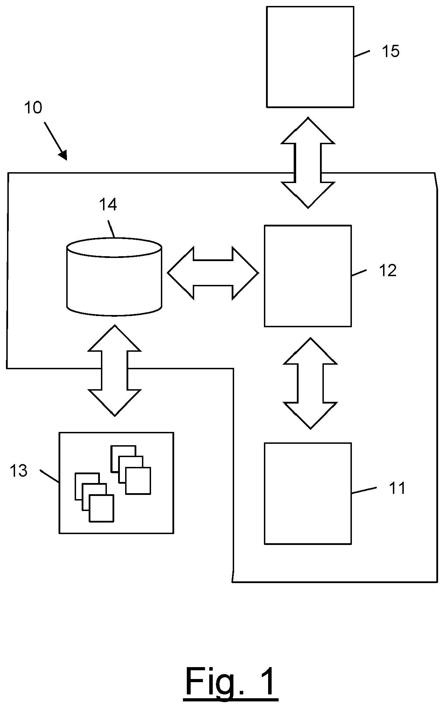

Figure 1 shows in schematic form a system 10 for providing a refund for the toll paid for travelling a road infrastructure section by a vehicle, according to an embodiment of the present invention.

The system 10 comprises a user terminal 11 and a management server 12. The user terminal 11 may be, for example, a smartphone, a tablet or a PC. The management server 12 is a server of the road infrastructure operator or of another entity managing the refund service on their behalf. It may be realized as a single apparatus or as the distributed architecture of apparatus cooperating with each other.

The management server 12 is in communication with the user terminal 11. The communication between user terminal 11 and management server 12 may be implemented as a fixed, mobile or mixed fixed/mobile connection. For example, the user terminal 11 may be provided with mobile radio connectivity which allows the connection thereof to a mobile radio access network in turn connected to one or more fixed networks to which the management server 12 is also connected.

The user terminal 11 is designed to allow the generation of refund requests and their transmission to the management server 12. For this purpose, the user terminal 11 may for example be provided with a software application configured to allow the introduction of refund requests by the user of the user terminal 11 and to transmit them to the management server 12. Alternatively, the user terminal 11 may be provided with a browser which allows access to a website managed by the road infrastructure operator or by another entity managing the refund service on their behalf.

In any case, the possibility of the user of the terminal 11 sending a refund request may be subordinated to a preliminary step involving registration with the refund service. During this step (which may be performed automatically upon initial access to the app or the website), the user may be required to provide one or more of the following data:

- a user identifier UID, which uniquely identifies the user and/or his/her vehicle within the context of the refund service (for example, an identifier of the OBU of the automatic toll collection service or license plate number of the vehicle);
- personal details of the user;
- data for crediting the refund (bank account details, credit card details, license plate number account, etc.); and
- credentials for accessing the refund service, comprising an access identifier (which may be the same as the user identifier UID, or a valid email address for example) and, optionally, a password.

Once registered, the user may access the refund service (by means of the software application or website) using the access credentials and enter his/her refund request which will be received by the management server 12.

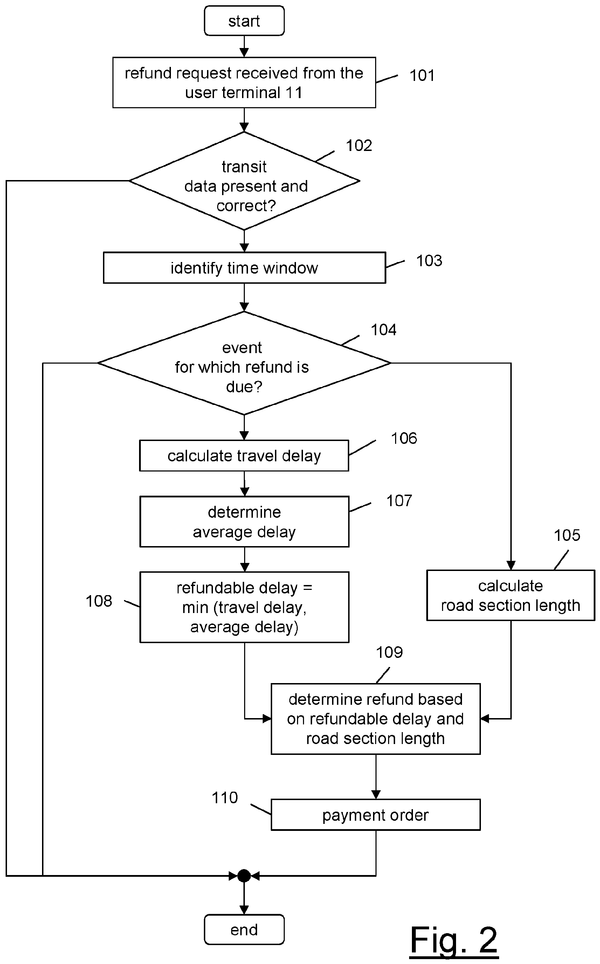

Figure 2 is a flow chart illustrating operation of the management server 12, according to an embodiment of the present invention.

Initially, the management server 12 receives a refund request by the user terminal 11 (step 101).

The refund request may relate to a specific trip or relate to all the trips made by the user.

If the request relates to a specific trip, it preferably comprises both the user identifier UID and information which allows identification of the specific trip for which the refund is requested. This may be for example the case where payment of the toll for which the refund is requested was made using a ticket. In this case, the trip is identified by the information shown on the ticket itself, which the user may enter manually or which may be automatically read for example from a photograph of the ticket taken with a digital photo camera or video camera of the user terminal 11.

If instead the request relates to all the trips made by the user, it may comprise only the user identifier UID. This may be for example the case where payment of the toll for which the refund is requested was made using an automatic toll collection system (OBU or video toll collection system).

When the refund request is received, the management server 12 preferably determines transit data relating to the trip for which the refund is requested. According to the embodiment shown in Figure 2, said transit data comprises:

- entry transit data provided by a detection station located at the entry gate along the travelled road infrastructure section; said data preferably comprise an identifier of the detection station which provided it and/or of the entry gate and the date and time of the entry transit; and
- exit transit data provided by a detection station located at the exit gate along the travelled road infrastructure section ; said data comprises preferably an identifier of the detection station which provided it and/or of the exit gate and the date and time of the exit transit.

According to the embodiment shown in Figure 2, the transit data does not comprise intermediate transit data detected between the entry gate and exit gate along the road infrastructure section. This may happen, for example, if the payment of the toll for which the refund is requested was made using a ticket or by means of an automatic toll collection service based on DSRC or RFID, or in the case of payment by means of a video toll collection system for a road infrastructure section located between two adjacent detection stations (namely between which no intermediate detection station is located).

If the refund request relates to a specific trip, the management server 12 may obtain the entry and exit transit data from the refund request itself.

If, instead, the refund request relates to all the trips made by the user, the management server 12 may use the UID identifier included in the refund request in order to recover a list of the entry and exit transit data for all the trips made by the user, for example from the automatic toll collection system with which the user is registered. The management server 12 then determines automatically whether or not each trip results in the right to a refund, by applying individually to each of said trips the successive steps of the flow diagram shown in Figure 2. The management server 12 in this case may also monitor periodically the trips made by the user so as to check over a period of time whether there are new trips for which the toll must be refunded.

Upon receipt of the refund request, the management server 12 may also optionally render anonymous the data (for example the license plate number) included in the refund request (step not shown in Figure 2).

Then the management server 12 preferably checks whether the entry and exit transit data are all present and are correct (step 102). For example, in the case of payment of a toll by means of a ticket, the management server 12 checks whether the entry transit data and exit transit data obtained from the refund request correspond to an actual transit. In the case where the entry and exit transit data are recovered automatically by the management server 12 (based on the UID identifier, as described above), the management server 12 preferably checks whether the entry and exit transit data relating to the trip may be regarded as being consistent with each other from a spatial/time point of view.

If the outcome of check 102 is negative, the management server 12 does not provide any refund.

If, instead, the outcome of check 102 is positive, the management server 12 preferably determines the time window during which the road infrastructure section was travelled (step 103). The time window is preferably determined on the basis of the entry and exit transit data and is delimited by the date and time of the entry transit and the date and time of the exit transit.

Then the management server 12 preferably determines whether, during the aforementioned time window, there was an event in progress along the road infrastructure section for which the refund is envisaged (step 104). For example, a refund may be envisaged for roadworks or maintenance work, while in the case of events which are not the responsibility of the operator (for example traffic jams owing to heavy traffic, weather conditions or accidents) no refund may be paid.

If the outcome of the check 104 is negative, the management server 12 does not provide any refund.

If, instead, the outcome of the check 104 is positive, the management server 12 preferably calculates the length of the road infrastructure section (step 105). For this purpose, a motorway graph may be used, for example, showing the lengths of the various basic sections of the road infrastructure.

The management server 12 then preferably calculates the travel delay (step 106), namely the difference between the actual time taken by the vehicle to travel the road infrastructure section (which is substantially equal to the duration of the aforementioned time window) and a nominal time for travelling the same road infrastructure section.

The nominal time for travelling the road infrastructure section is preferably determined as the ratio between the length of the road infrastructure section and the commercial speed along the road infrastructure section for the category of vehicles to which the user's vehicle belongs. According to a variant, the commercial speed may be replaced by an average speed detected for the category of vehicles to which the user's vehicle belongs, along the road infrastructure section, during periods in which there is no event which may be the cause of exceptional delays (roadworks, accidents, etc.) along the road infrastructure section.

The management server 12 then preferably determines an average delay incurred by a plurality of vehicle in transit along the same road infrastructure section during a period at least partially overlapping with the time window determined at step 103 (step 107). For example, in order to determine the average delay, it may consider the delays of all the vehicles in transit along the same road infrastructure section during the whole day (24 hours) in which the aforementioned time window is included or, more preferably, during a time slot (for example lasting between 3 and 4 hours) in which the aforementioned time window is included.

According to one embodiment, the average delay incurred by the plurality of vehicles is calculated on the basis of geolocation data provided by a plurality of geolocation units (indicated by the reference number 13 in Figure 1) situated on-board the said vehicles. These geolocation units 13 may be, for example, included in the mobile terminals (cell phones or smartphones) of the vehicle drivers, possibly equipped with a special software application which manages the collection of the geolocation data and the transmission thereof to a database (indicated by the reference number 14 in Figure 1) to which the management server 12 has access.

The database 14 in which the geolocation data provided by the geolocation units 13 are stored may be an external database, namely belonging to an external entity which uses this data for other purposes (for example Google, which uses said data to provide users with its traffic information and travel time navigation service). In this case, the average delay may be calculated by the external unit and, at step 107, the management server 12 merely reads the delay from the database 14 of the external entity. Alternatively, the database 14 may be managed by the operator responsible for the said refund service or may form part of the system 10 (as shown in Figure 1). In this case, at step 107, the management server 12 reads from the database 14 the geolocation data relating to the period at least partially overlapping with the time window determined at step 103 to be taken into consideration and processes said data in order to calculate independently the average delay.

The management server 12 then preferably determines a refundable delay as the minimum of the travel delay calculated at step 106 and the average delay determined at step 107 (step 108).

The management server 12 then determines the refund to be paid to the user, on the basis of the length of the road infrastructure section calculated at step 105 and the refundable delay determined at step 108 (step 109). Specifically, the refund is calculated as a percentage of the sum of the toll paid (preferably automatically determined by the management server 12 on the basis of the transit data), where the percentage is determined in a manner substantially proportional to the ratio between the refundable delay and the length of the road infrastructure section. Therefore, for the same length of the road infrastructure section, the greater the refundable delay, the greater is the percentage of the sum of the paid toll which will be refunded. On the other hand, for the same refundable delay, the smaller the length of the road infrastructure section, the greater is the percentage of the sum of the toll paid which will be refunded. Greater delays along shorter sections therefore result in higher refund percentages.

An example of a table for determining the refund percentage depending on the refundable delay and the length of the travelled road infrastructure section is shown below:

| | | length (km) | | | | | | | |
|---|---|---|---|---|---|---|---|---|---|
| | | 0-29 | 30-49 | 50-99 | 100-149 | 150-149 | 250-349 | 350-499 | >500 |
| refundable delay (minimum) | 10-14 | 75% | 50% | 25% | - | - | - | - | - |
| | 15-29 | 100% | 75% | 50% | 25% | 20% | 15% | 10% | 5% |
| | 30-44 | 100% | 100% | 75% | 50% | 25% | 20% | 15% | 10% |
| | 45-59 | 100% | 100% | 100% | 75% | 50% | 25% | 20% | 15% |
| | 60-89 | 100% | 100% | 100% | 100% | 75% | 50% | 25% | 20% |
| | 90-119 | 100% | 100% | 100% | 100% | 100% | 75% | 50% | 25% |
| | >120 | 100% | 100% | 100% | 100% | 100% | 100% | 75% | 50% |

As can be seen, the refundable percentage increases with an increase in the refundable delay and a decrease in the length.

Optionally, according to a variant of the present invention, a further discount on the toll fee may be added to the refund determined at step 109. For example, a further discount may be added if the time window of the transit falls within a predefined preferential time slot and/or if the road infrastructure section is situated in a particular geographical zone and/or if the vehicle has certain features (type of fuel supply, vehicle category, etc.), and/or if the user is a commuter.

Once the refund (plus the optional additional discount) has been determined, the management server 12 generates an order for payment of the determined refund (step 110). The payment order is preferably transmitted to a payment server (indicated by the reference number 15 in Figure 1) external to the system 10, which deals with the transaction using a refund method specified by the user at the time of registration with the refund service. Optionally, once the transaction has been concluded, the payment server 15 may send a confirmation to the management server 12, which may transmit a corresponding notification to the user terminal 11, so as to inform the user that the refund has been paid.

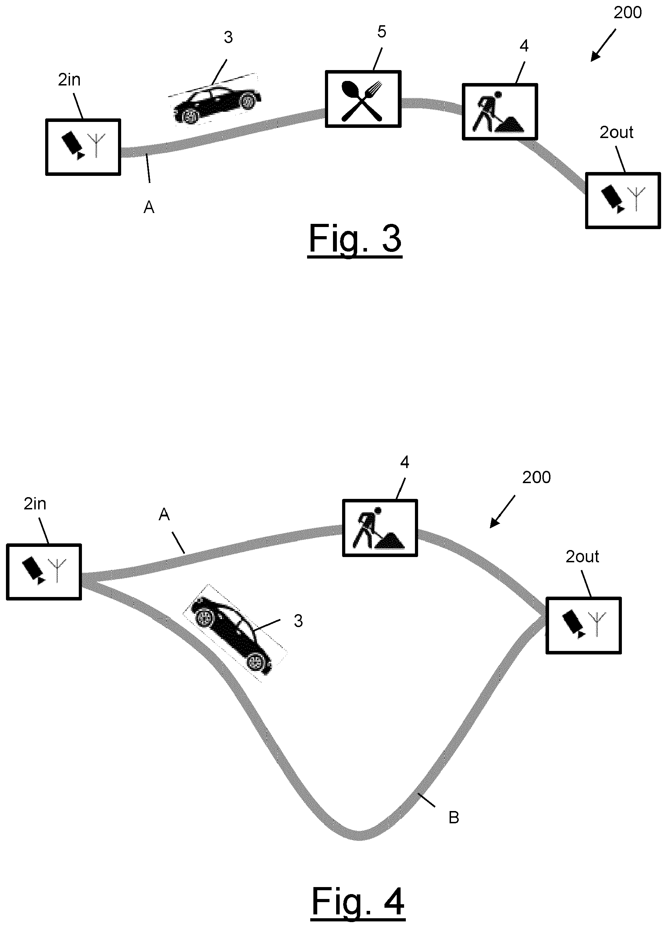

Advantageously, the system 10 allows reducing the risk of paying out refunds based on exceptional delays which, actually, are at least partly (if not entirely) due to events which are not the responsibility of the operator, as will be described now in greater detail with reference to Figure 3.

Figure 3 shows a portion of a motorway network 200 along which a detection station 2in situated at an entry gate and a detection station 2out situated at an exit gate are provided. The two entry and exit gates delimit a motorway section A of length LA.

It is assumed that a vehicle 3 travels the motorway section A. The vehicle will pass through, in succession, the detection stations 2in and 2out which will generate, upon transit thereof, respective entry and exit data. On the basis of this transit data the toll to be paid by the driver of the vehicle 3 for travelling the motorway section A will be calculated. The payment of the toll will be carried out by means of a ticket or automatic toll collection system (DSRC or video toll collection system) using methods which are known and do not form the subject of the present invention.

It is assumed now that along the motorway section A there are roadworks 4 which result in an average delay of $D_{AV(A)}$ (e.g. 20 minutes) for the vehicles in transit. It is also assumed that along the motorway section A there is a service area 5 where the driver of the vehicle 3 made a long stop lasting Ds (e.g. 60 minutes).

Application of the known refund determination method would result in a refund calculated according to the travel delay, which is significantly longer than the nominal time for travelling the motorway section A. The travel delay, however, is due not only to the presence of the roadworks 4, but in particular to the fact that the driver of the vehicle 3 made a long stop at the service area 5. The operator would therefore pay out a high refund amount (i.e. based on the travel delay $D_S+D_{AV(A)}$ = 80 minutes) whereas, actually, only a part of the travel delay is due to events which are the responsibility of the operator.

If, instead, the algorithm according to Figure 2 is applied, the management server 12 determines a refundable delay $D_{CB}$ as the minimum of the travel delay $D_S+D_{AV(A)}$ and the average delay $D_{AV(A)}$, namely:

$$D_{CB} = \min(D_S+D_{AV(A)};\ D_{AV(A)}) \hspace{3cm} [1]$$

The refundable delay $D_{CB}$, namely the parameter used to the calculate the refund (together with the length LA of the motorway section A) is therefore equal to the average delay $D_{AV(A)}$, which represents the maximum delay for which a refund may be requested. In other words, for the purposes of determining the refund, delays greater than $D_{AV(A)}$ are regarded as being presumably attributable at least partly to reasons other than the presence of the roadworks 4 along the motorway section A and therefore are reduced to the average delay $D_{AV(A)}$. The refundable percentage, being proportional to the ratio between the refundable delay and length of the travelled motorway section, will therefore be equal to an amount based on $D_{AV(A)}$ = 20 minutes (and not $D_S+D_{AV(A)}$ = 80 minutes),

For example, in the case where the length LA of the motorway section A is equal to 120 km, determination of the refund percentage calculated according to the travel delay (80 minutes) based on the example table shown above would result in a 100% refund of the toll paid. For the same length LA = 120 km, if the algorithm according to Figure 2 is applied, the management server 12 instead determines a refund based on the average delay (20 minutes), i.e. equal to 25% of the toll paid. Advantageously, therefore, it is avoided paying out a refund calculated according to a delay which, actually, is mainly due to an event which is not the responsibility of the operator.

In the flow diagram shown in Figure 2 (and also in the exemplary scenario of Figure 3) it has been assumed that only one possible route is present between the entry gate and the exit gate. However, it may happen that two or more possible routes, typically with different lengths (and therefore travel times), are present between the entry gate and the exit gate.

In this case, according to a first variant of the flow chart shown in Figure 2, at step 104 the management server 12 checks whether, during the time window determined at step 103, there was in progress an event for which the refund is due along at least one of the possible routes between the entry gate and the exit gate.

If the outcome of check 104 is negative, the management server 12 does not provide any refund.

If, instead, the outcome of check 104 is positive, according to this first variant the management server 12 preferably considers all the possible routes between the exit gate and the entry gate and, to each of them, applies the steps 105, 106, 107, 108 and 109 described above, namely: it calculates the length of the possible route (step 105), calculates a travel delay as the difference between the actual time taken by the vehicle to travel between the entry gate and the exit gate and the nominal time for travelling the possible route (step 106), determines an average delay incurred by a plurality of vehicles in transit along that possible route during a period at least partially overlapping with the time window determined at step 103 (step 107), determines a refundable delay as the minimum of the travel delay and the average delay (step 108) and finally calculates the refund in proportion to the refundable delay and the length of that possible route (step 109).

By applying the aforementioned steps to each possible route, the management server 12 thus obtains a possible refund for each possible route. The actual refund is then chosen from among these possible refunds. For example, the management server 12 may decide to pay a refund equal to the maximum of the possible refunds calculated.

Advantageously, this first variant is also able to reduce the risk of paying out refunds calculated on the basis of exceptional delays which, actually, are at least partly (if not entirely) due to events which are not the responsibility of the operator, as will be described now in greater detail with reference to Figure 4.

In the exemplary scenario of Figure 4, unlike that which happens in the situation shown in Figure 3, two alternative routes of different lengths, namely a first route A with length LA and a second route B with length LB greater than LA, are present between the two entry and exit gates.

As mentioned above in connection with Figure 3, the roadworks 4 along the route A result on average in a delay $D_{AV(A)}$ (e.g. 20 minutes) for the vehicles in transit. The vehicle 3 follows, however, the route B along which there are no roadworks.

Application of the known refund determination method would result in a refund based on the travel delay calculated with respect to the nominal time for travel along the shortest route, namely the route A. The travel delay, however, is not due to the presence of the roadworks 4, but to the fact that the driver of the vehicle 3 has travelled the route B which, having a greater length than the route A, necessarily has a longer travel time. This would lead the operator to decide to pay a high refund, namely based on the travel delay $T_{EFF}$-$T_{NOM(A)}$ (in which $T_{EFF}$ is the actual travel time of the route B and $T_{NOM(A)}$ is the nominal time for travelling the route A) in those cases where, actually, the travel delay was not due at all to events for which the operator is responsible.

By applying instead the algorithm of Figure 2 in its first variant described above, the management server 12 would determine two different refundable delays, namely:

$$D_{CB(A)} = \min(T_{EFF} - T_{NOM(A)}; D_{AV(A)}) \qquad [2a]$$

$$D_{CB(B)} = \min(T_{EFF} - T_{NOM(B)}; D_{AV(B)}) \qquad [2b]$$

in which $D_{AV(A)}$ and $D_{AV(B)}$ are the average delays respectively along the route A and along the route B. If along the route B there are no roadworks or other event which results in an exceptional delay, the refundable delay $D_{CB(B)}$ will be substantially equal to 0 and will therefore result in a substantially zero refund. If then the management server 12 decides to pay the user the maximum refund from among those calculated for the possible routes A and B, the user will be paid that calculated on the basis of the refundable delay $D_{CB(A)}$. In connection with the refundable delay $D_{CB(A)}$, it should be noted, however, that, in the case where the travel delay $T_{EFF} - T_{NOM(A)}$ is greater than the average delay $D_{AV(A)}$, the refundable delay $D_{CB(A)}$, namely the parameter used for calculation of the refund (together with the length LA of the shortest route A), is in any case reduced to the average delay $D_{AV(A)}$, which in this case also represents therefore the maximum delay for which a refund may be requested. In other words, for the purposes of determining the refund, travel delays $T_{EFF} - T_{NOM(A)}$ greater than $D_{AV(A)}$ due to the fact that the vehicle has travelled a route B different from the shorter router A are in fact reduced to the average delay $D_{AV(A)}$. In the case where $T_{EFF} - T_{NOM(A)}$ is greater than the average delay $D_{AV(A)}$, the refundable percentage will therefore be commensurate to $D_{AV(A)}$, and not to $T_{EFF} - T_{NOM(A)}$. For example, in the case where the length LA of the motorway section A is equal to 120 km and the travel delay $T_{EFF} - T_{NOM(A)}$ is equal to 40 minutes, determination of the refund percentage commensurate to the travel delay (40 minutes) based on the example table shown above would result in a 50% refund of the toll paid. For the same length LA = 120 km, if the algorithm according to Figure 2 in its first variant described above is applied, the management server 12 instead determines a refund commensurate to the average delay $D_{AV(A)}$ (20 minutes), i.e. equal to 25% of the toll paid. Advantageously, it is avoided paying out a refund calculated on the basis of a delay which, actually, is due to the fact that the vehicle 3 travelled the route B, which is longer than the route A.

In the embodiment shown in Figure 2 and in its first variant described hitherto, it is assumed that the transit data which the management server 12 obtains from the refund request comprises entry transit data, exit transit data, but not intermediate transit data.

However, in some cases it may be possible for the management server 12 to determine also intermediate transit data provided by at least one detection station located at at least one intermediate point of the road infrastructure section travelled by the vehicle. Said intermediate transit data comprises preferably an identifier of the detection station which provided said data, and/or of the intermediate point and the date and time of the intermediate transit. This situation may arise for example in the case of payment by means of video toll collection for a road infrastructure section along which detection stations are situated not only at the entry and exit gates, but also at one or more intermediate points, in order to allow determination of the toll based on the actual route travelled between entry gate and exit gate.

In this case, according to a second variant of the flow diagram shown in Figure 2, after extrapolating from the refund request the entry transit data, exit transit data and intermediate transit data and checking for the completeness and correctness thereof (step 102), in the next step 103 the management server 12 determines not only the time window of the transit, but also the actual route travelled between entry gate and exit gate. The determination of the actual route at step 103 according to this second variant is advantageously performed using also the intermediate transit data.

Therefore, at step 104, the management server 12 checks whether, during the time window determined at step 103, an event for which refund is due was in progress along the actual route.

If the outcome of check 104 is negative, the management server 12 does not provide any refund.

If, instead, the outcome of check 104 is positive, according to this second variant the management server 12 applies the steps 105, 106, 107, 108 and 109 described above to the actual route, namely: it calculates the length of the actual route (step 105), calculates a travel delay as the difference between the actual time taken by the vehicle to travel between the entry gate and the exit gate and the nominal time for travelling the actual route (step 106), determines an average delay incurred by a plurality of vehicles in transit along the actual route during a period at least partially overlapping with the time window determined at step 103 (step 107), determines a refundable delay as the minimum of the travel delay and the average delay (step 108) and finally calculates the refund in proportion to the refundable delay and the length of the actual route (step 109).

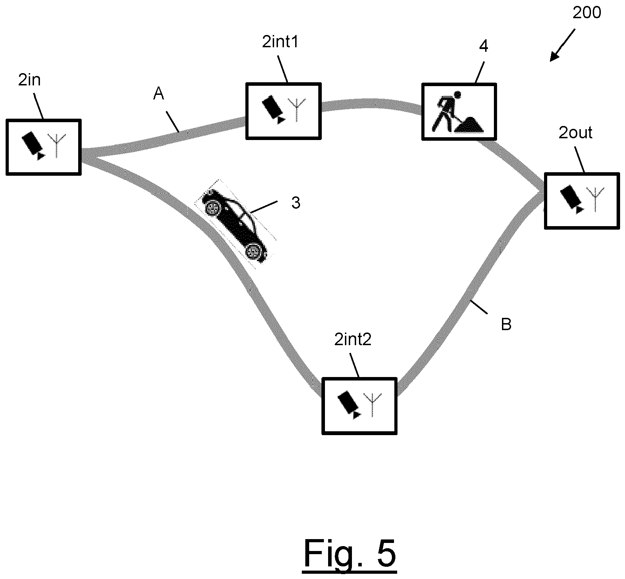

Advantageously, this second variant also allows reducing the risk of paying out refunds calculated according to exceptional delays which, actually, are at least partly (if not entirely) due to events which are not the responsibility of the operator, as will be described now in greater detail with reference to Figure 5.

Figure 5 shows a further exemplary scenario which is similar to that shown in Figure 4 except for the fact that, at an intermediate point along the route A, a detection station 2int1 is provided and, at an intermediate point of the route B, a detection station 2int2 is provided.

As mentioned above in connection with Figure 4, the roadworks 4 along the route A result on average in a delay $D_{AV(A)}$ (e.g. 20 minutes) for the vehicles in transit. The vehicle 3 follows, however, the route B along which there are no roadworks. The vehicle will therefore pass through, in succession, the detection stations 2in, 2int2 and 2out which will generate, upon transit thereof, respective entry, intermediate and exit data. On the basis of this transit data, the toll to be paid by the driver of the vehicle 3 for travelling the motorway section situated between the entry gate and the exit gate will be calculated. The transaction (complete with transit data and sum paid) will be managed and stored by the automatic toll collection system (not shown in the drawings) using methods which are known and do not form the subject of the present invention.

In this case, by applying the above-described second variant of the algorithm of Figure 2, on the basis of the entry and exit transit data and also the intermediate transit data, the management server 12 determines that the actual route travelled by the vehicle 3 is the route B. Since no events which involve a refund are found along the route B (step 104), the management server 12 will therefore conclude that the payment of any refund is not due.

By determining the actual route travelled by the vehicle 3 between the entry gate and the exit gate therefore allows avoiding entirely the payment of a refund for those cases where, actually, the vehicle did not incur any exceptional delay due to events for which the operator is responsible, but merely travelled the route B, which is longer than the route A.

**Claims**

1. System (10) for providing a refund for a toll paid for travelling a road infrastructure section (200) by a vehicle (3), said system (10) comprising a user terminal (11) and a management server (12) in communication with the user terminal (11), wherein:

   - said user terminal (11) is configured to send a refund request to said management server (12); and
   - said management server (12) is configured, upon receipt of said refund request: to determine a length of said road infrastructure section (200) and a refundable delay as the minimum of: (i) a travel delay calculated as the difference between an actual time taken by said vehicle (3) to travel said road infrastructure section (200) and a nominal time for travelling said road infrastructure section (200) and (ii) an average delay incurred by a plurality of vehicles in transit along said road infrastructure section (200) during a period at least partially overlapping with the time window during which said vehicle (3) travelled said road infrastructure section (200); to determine said refund on the basis of said length of said road infrastructure section (200) and said refundable delay; and to generate a payment order for said determined refund.

2. System (10) of claim 1, wherein said management server (12) is configured to determine said refund in the form of a percentage of said toll, said percentage being substantially proportional to the ratio between said refundable delay and said length of said road infrastructure section (200).

3. System (10) according to claim 1 or 2, wherein said average delay is determined on the basis of geolocation data provided by a plurality of geolocation units (13) located on-board said plurality of vehicles.

4. System (10) according to claim 3, wherein said plurality of geolocation units (13) is comprised in mobile terminals of drivers of said plurality of vehicles.

5. System (10) according to any one of the preceding claims, wherein said period at least partially overlapping with the time window during which said vehicle (3) travelled said road infrastructure section (200) has a maximum duration of 24 hours.

6. System (10) according to any one of the preceding claims, wherein said management server (12) is configured to determine, from said refund request, transit data relating to said travel along said road infrastructure section (200) by said vehicle (3).

7. System (10) according to claim 6, wherein said management server (12) is configured to determine said time window and said actual time taken by said vehicle (3) to travel said road infrastructure section (200) on the basis of said transit data.

8. System (10) according to claim 6 or 7, wherein said transit data comprises entry transit data provided by a first detection station (2in) located at an entry gate of said road infrastructure section (200) and exit transit data provided by a second detection station (2out) located at an exit gate of said road infrastructure section (200).

9. System (10) according to claim 8, wherein at least two possible routes (A, B) are present between said entry gate and said exit gate and wherein said management server (12) is configured, upon receipt of said refund request:

   - to determine, for each possible route of said at least two possible routes (A, B), a length of said possible route (A, B) and a possible refundable delay as the minimum of: (i) a travel delay calculated as the difference between said actual time taken by said vehicle (3) to travel said road infrastructure section (200) and a nominal time for travelling said possible route (A, B) and (ii) an average delay incurred by a plurality of vehicles in transit along said possible route (A, B) during said period at least partially overlapping with said time window during which said vehicle (3) travelled said road infrastructure section (200); and to determine a possible refund for said possible route (A, B) on the basis of said length of said possible route (A, B) and said possible refundable delay; and
   - to determine said refund by selecting it from among said possible refunds.

10. System (10) according to claim 9, wherein said management server (12) is configured to determine said refund as the maximum of said possible refunds.

11. System (10) according to claim 8, wherein said transit data also comprises intermediate transit data provided by at least one detection station (2int1) located at at least one intermediate point of said road infrastructure section (200).

12. System (10) according to claim 11, wherein said management server (12) is configured, upon receipt of said refund request:

   - to determine, on the basis of said transit data, an actual route of said vehicle (3) between said entry gate and said exit gate;
   - to determine whether, during said time window, along said actual route an event was in progress for which said refund is envisaged; and
   - in the affirmative, to determine a length of said actual route and said refundable delay as the minimum of: (i) said travel delay calculated as the difference between said actual time taken by said vehicle (3) to travel said section of said infrastructure road (200) and a nominal time for travelling said actual route and (ii) an average delay incurred by a plurality of vehicles in transit along said actual route during said period at least partially overlapping with the time window during which said vehicle (3) travelled said road infrastructure section (200); and to determine said refund on the basis of said length of said actual route and said refundable delay.

13. Method for providing a refund for a toll paid for travelling a road infrastructure section (200) by a vehicle (3), said method comprising:

   a) receiving a refund request from a user terminal (11);
   b) upon receipt of said refund request, determining a length of said road infrastructure section (200) and a refundable delay as the minimum of: (i) a travel delay calculated as the difference between an actual time taken by said vehicle (3) to travel said road infrastructure section (200) and a nominal time for travelling said road infrastructure section (200) and (ii) an average delay incurred by a plurality of vehicles in transit along said road infrastructure section (200) during a period at least partially overlapping with the time window during which said vehicle (3) travelled said road infrastructure section (200);

c) determining said refund on the basis of said length of said road infrastructure section (200) and said refundable delay; and

d) generating a payment order for said determined refund.

14. Computer program comprising instructions which, when said program is run by a computer, induce said computer to carry out the steps of the method according to claim 13.

<u>Fig. 1</u>

start

refund request received from the user terminal 11 — 101

transit data present and correct? — 102

identify time window — 103

event for which refund is due? — 104

calculate travel delay — 106

determine average delay — 107

108 — refundable delay = min (travel delay, average delay)

105 — calculate road section length

109 — determine refund based on refundable delay and road section length

110 — payment order

end

Fig. 2

Fig. 3

Fig. 4

2int1

2in

A

200

4

2out

3

2int2

B

<u>Fig. 5</u>

Europäisches
Patentamt

European
Patent Office

Office européen
des brevets

# EUROPEAN SEARCH REPORT

Application Number

EP 23 17 8720

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Pölös Zsófia: "Italian motorway operator to return road tolls for roadworks delays Read more at: https://trans.info/en/italian-motorway-operator-returns-money-for-time-wasted-due-to-roadworks-286919", , 24 May 2022 (2022-05-24), XP093020830, Retrieved from the Internet: URL:https://web.archive.org/web/2022052408 0523/https://trans.info/en/italian-motorway-operator-returns-money-for-time-wasted-due-to-roadworks-286919 [retrieved on 2023-02-03] * page 1 – page 4 * ----- | 1–14 | INV. G07B15/06 G06Q30/0283 |
| A | CN 108 597 043 B (JIANGXI XINDE ELECTRIC TECH CO LTD) 24 August 2021 (2021-08-24) * claims 1–10 * ----- | 1–14 | |
| | | | TECHNICAL FIELDS SEARCHED (IPC) G07B G06Q |

The present search report has been drawn up for all claims

| Place of search | Date of completion of the search | Examiner |
|---|---|---|
| The Hague | 30 November 2023 | Hniene, Badr |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 8720

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2023

| Patent document cited in search report | Publication date | Patent family member(s) | Publication date |
|---|---|---|---|
| CN 108597043 B | 24-08-2021 | NONE | |

For more details about this annex : see Official Journal of the European Patent Office, No. 12/82